(19) Europäisches Patentamt
European Patent Office
Office européen des brevets

(11) **EP 2 108 527 B1**

(12) **EUROPEAN PATENT SPECIFICATION**

(45) Date of publication and mention
of the grant of the patent:
**13.04.2011 Bulletin 2011/15**

(51) Int Cl.:
*B60C 1/00* (2006.01)          *B60C 11/00* (2006.01)
*C08K 7/22* (2006.01)          *C08K 7/28* (2006.01)

(21) Application number: **09157364.2**

(22) Date of filing: **06.04.2009**

(54) **Tire with tread having an intermediate rubber layer containing a microsphere dispersion**

Reifen mit Lauffläche mit mittlerer Gummischicht und einer Mikrosphärendispersion

Pneu doté d'une bande avec une couche de caoutchouc intermédiaire contenant une dispersion à microsphère

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **09.04.2008 US 99911**

(43) Date of publication of application:
**14.10.2009 Bulletin 2009/42**

(73) Proprietor: **The Goodyear Tire & Rubber Company
Akron, OH 44316-0001 (US)**

(72) Inventors:
• **Zhang, Ping**
  **Hudson, OH 44236 (US)**
• **Sandstrom, Paul Harry**
  **Cuyahoga Falls, OH 44223 (US)**
• **Hubbell, Joseph Kevin**
  **Akron, OH 44313 (US)**

• **Majumdar, Ramendra Nath**
  **Hudson, OH 44236 (US)**
• **Neubauer, Robert Anthony**
  **Medina, OH 44256 (US)**
• **Burg, Gary Robert**
  **Massillon, OH 44646 (US)**

(74) Representative: **Kutsch, Bernd
Goodyear SA
Patent Department
Avenue Gordon Smith
7750 Colmar-Berg (LU)**

(56) References cited:
EP-A- 1 052 270          EP-A- 1 752 491
EP-A- 1 897 702          EP-A- 1 897 703
US-A- 5 908 896          US-A1- 2001 016 629
US-A1- 2001 051 681

**Description**

Field of the Invention

The invention relates to a tire with a tread having an intermediate rubber layer which contains a dispersion of high strength hollow microspheres, preferably glass and/or ceramic microspheres. In particular, such tire tread comprises at least three radially disposed zones of rubber layers composed of a radially outer tread rubber cap layer, a radially inner tread base rubber layer and an intermediate, transition rubber layer positioned between said outer rubber cap layer and said inner rubber base layer. The intermediate tread rubber contains a dispersion of glass and/or ceramic microspheres together with a coupling agent.

Background of the Invention

Enhanced fuel efficiency is often desired for various vehicles for which, in,turn, more fuel efficient tires may be desired. In one sense, reducing the weight of a tire may be desirable to promote greater efficiency for the tire, particularly where various physical properties of the rubber can be substantially maintained.

For this invention, as hereinbefore discussed, a tire is provided having a multilayered, or zoned, rubber tread which contains a specialized intermediate transition rubber layer positioned between an outer cap rubber layer and an inner base rubber layer.

The outer cap rubber layer comprises ground-contacting tread lugs and associated tread grooves positioned between said tread lugs. The tread grooves may extend radially inward through the outer rubber cap layer and, optionally, into the intermediate transition rubber layer. The rubber base layer underlies the intermediate transition rubber layer. In practice, the tread rubber base layer may be positioned next to an underlying circumferential carcass belt layer in a manner that the intermediate transition rubber layer with its microsphere dispersion is thereby spaced apart from the carcass belt layer.

For this invention, the intermediate tread rubber layer contains a dispersion of high strength microspheres comprising glass and/or ceramic microspheres together with a coupling agent (to couple the microspheres to the diene-based elastomers of the intermediate tread rubber) having a moiety interactive with hydroxyl groups contained on the microspheres and another, different moiety interactive with diene-based elastomers.

In such manner, weight of the tire tread is reduced by the microsphere dispersion in the intermediate rubber layer of the tire tread in the sense of the microspheres being significantly lighter in weight than the rubber composition. Further, the coupling agent is used to enhance one or more physical properties of the intermediate tread rubber layer.

In practice, the tread cap rubber layer is typically prepared with a relatively expensive combination of elastomers and compounding ingredients intended to promote a tire running surface with suitable resistance to tread wear, enhanced traction and reduced rolling resistance. The presence of the intermediate tread rubber layer can promote a reduction in overall cost of the resulting tire tread.

During service, the lugs of the tread cap rubber layer gradually wear away until the tread cap layer of the worn tire becomes sufficiently thin that the tire should be taken out of service. At that time, a considerable amount of the relatively expensive rubber tread cap layer normally remains which is either discarded with the tire or ground away to prepare the tire for retreading.

Accordingly, motivation is present for preparing a novel lighter weight, cost-savings tire tread which is a departure from past practice.

In practice, the outer tread rubber cap layer is typically of a rubber composition containing reinforcing filler comprising rubber reinforcing carbon black, precipitated silica or a combination of rubber reinforcing carbon black and precipitated silica. A major function of the tread cap layer is typically to promote a reduction in rolling resistance, promote traction for the tire tread as well as to promote resistance to tread wear.

The tread base rubber layer is typically composed of a softer and cooler running rubber composition, as compared to the rubber composition of the outer tread cap layer to, in one sense, provide a cushion for the outer tread cap layer.

For this invention, the intermediate tread rubber layer is presented as a significant departure from said outer tread cap rubber layer, and said tread base rubber layer in a sense that it contains a dispersion of high crush strength microspheres together with a coupling agent. The tread cap rubber layer itself, and the tread base rubber layer, do preferably not contain any appreciable amount of, and are most preferably exclusive of, said high strength microspheres.

In this manner, then, the intermediate tread rubber layer is considered herein to be neither of such tread cap rubber layer nor the tread base rubber layer because it contains the dispersion of lower density microspheres together with a coupling agent.

In one embodiment of the invention, as the tread cap rubber layer, and its associated tread lugs with their running surfaces, wears away during the running of the tire over time during the service of the tire, the underlying transition rubber layer, which extends radially outwardly into a portion of the lugs, and optionally into the grooves, of the outer tread cap layer, becomes exposed and thereby becomes a new portion of the running surface of the tread prior to the tread being sufficiently worn to warrant removing the tire from service. In this manner, then, the microsphere-containing intermediate tread layer may present a new running surface for the tread after a sufficient amount of the outer tread cap rubber layer wears away when the intermediate rubber layer contains a rubber composition with a similar composite glass transition temperature (Tg) and a suitable carbon black and/or silica reinforcement content to offer similar tread surface traction (tire ground-contacting running surface traction). The lug and groove configuration of the worn tread is therefore substantially maintained, since the underlying intermediate layer extends radially outward within the tread lugs to form a new running surface for the tread lugs.

In one embodiment then, such tire is provided wherein at least a portion of said intermediate tread rubber layer is positioned within at least one of said tread lugs of said outer tread cap rubber layer in a manner to become a running surface of the tire upon at least a portion of said lug of said outer tread cap layer wearing away (e.g. as the tire is run in service) to expose said transition rubber layer.

Historically, various dual layered tire treads have been proposed which are composed of a cap/base construction in which the outer tread cap rubber layer contains a running surface for the tire and the underlying tread base rubber layer provides, in a sense, a cushion for the tread cap layer, such as for example US-B-6,959,743 or of a dual tread base layer configuration, such as for example US-B-6,095,217 as well as a cap/base construction in which the base layer extends into lugs of the tread and into its tread cap layer such as for example US-B- 6,336,486.

The tire tread of this invention differs significantly from such patent publications in a sense that the intermediate rubber layer is provided in addition to and intermediate to the tread cap rubber layer and the tread base rubber layer and, further, that the intermediate rubber layer contains the dispersion of high crush strength microspheres with the coupling agent.

Various tire rubber components, including treads, have been proposed which contain hollow particles for various purposes. For example, see US-B- 5,967,211 and US-B- 6,626,216; as well as EP-A- 1 329 479 and EP-A- 1 447 424.

The tread of this invention differs significantly from such patent publications in a sense that the intermediate rubber layer which contains the dispersion of the high strength glass and/or ceramic, particularly glass, microspheres is provided in addition and intermediate to the tread cap rubber layer and the tread base rubber layer and, further, that the intermediate rubber layer is thereby spaced apart from the tire carcass. A further significant difference is that a particular embodiment of this invention requires a coupling agent, namely preferably a siloxane based coupling agent, to be used in combination with said microspheres to aid in coupling the microspheres to the rubber of the intermediate tread layer and to thereby enhance the physical properties of the rubber/microsphere composite to promote dimensional integrity and enhanced long term durability of the associated tire tread itself.

In the description of this invention, the terms "rubber" and "elastomer" where used herein, are used interchangeably, unless otherwise indicated. The terms "rubber composition", "compounded rubber" and "rubber compound", where used herein, are used interchangeably to refer to "rubber which has been blended or mixed with various ingredients" and the term "compound" relates to a "rubber composition" unless otherwise indicated.

In the description of this invention, the term "phr" refers to parts of a respective material per 100 parts by weight of rubber, or elastomer. The terms "cure" and "vulcanize" are used interchangeably unless otherwise indicated. The term "Tg", if used, means the middle point glass transition temperature of an elastomer determined by DSC (differential scanning calorimeter) at a heating rate of 10˚C per minute as would be understood by those having skill in such art.


Summary and Practice of the Invention

In accordance with this invention, a tire according to claim 1 is provided.

In one embodiment of the invention, said microspheres are hollow glass microspheres.

In a further embodiment of the invention, the hollow microspheres, particularly said glass hollow microspheres, have crush strength of at least 5,000 psi (34.5 MPa), and desirably at least 6,000 psi (41.4 MPa).

In an embodiment, the hollow microspheres, particularly said glass hollow microspheres, have a crush strength in a range of from 5,000 to 50,000 psi (34.5 to 345 MPa).

In one embodiment, a maximum percent of hollow microspheres, particularly glass hollow microspheres, in a form of at least partially crushed hollow microspheres is up to 30 percent and more desirably a maximum of up to 15 percent, of the total microspheres in the rubber composition. In one embodiment, the percentage of at least partially crushed hollow microspheres is in a range of from 5 to 15 percent.

For example, it is desirable that a maximum percent of the hollow microspheres in an at least partially crushed state in the rubber composition is up to 30 percent, particularly glass hollow microspheres, which have a crush strength of 6,000 psi (41.4 MPa) and a maximum percent of the microspheres in an at least partially crushed state in the rubber composition is up to 15 percent, alternately a maximum percent of 10 percent, particularly glass hollow microspheres, which have a crush strength of at least 10,000 psi (at least 69 MPa).

In an embodiment, said hollow microspheres, particularly said glass microspheres, have an average outer diameter in a range of from 10 to 50 microns, alternatively 20 to 40 microns.

In one embodiment, said tread intermediate rubber layer is a rubber composition comprising, based upon parts by weight per 100 parts by weight rubber (phr):

(A) 100 phr of at least one conjugated diene-based elastomer;
(B) from 5 to 50 phr of a dispersion of at least one of glass and ceramic hollow microspheres, particularly glass hollow microspheres, and
(C) a coupling agent having a moiety reactive with hydroxyl groups contained on said microspheres and another different moiety interactive with said conjugated diene-based elastomer(s).

In one embodiment, said tread intermediate rubber layer contains 30 to 90, alternately from 30 to 80, phr of filler reinforcement selected from at least one of rubber reinforcing carbon black and silica, preferably precipitated silica, comprising:

(A) rubber reinforcing carbon black;
(B) silica, preferably amorphous synthetic silica or precipitated; or
(C) a combination of rubber reinforcing carbon black and silica, preferably synthetic amorphous silica or precipitated silica, e.g. from 5 to 85, or alternatively, 75, phr of rubber reinforcing carbon black and from 5 to 85, or, alternatively, 75, phr of silica.

In one embodiment, said tread outer cap layer rubber may contain from 40 to 120 phr of filler reinforcement selected from at least one of carbon black and silica comprising:

(A) rubber reinforcing carbon black;
(B) silica, preferably amorphous synthetic silica or precipitated silica; or
(C) a combination of rubber reinforcing carbon black and said silica, e.g. from 20 to 80 phr of rubber reinforcing carbon black and from 5 to 80 phr of said silica.

A significant aspect of this invention is providing the inclusion of the intermediate tread rubber layer in the tire tread configuration which contains said microspheres in a sense of providing a tread of reduced weight.

An additional embodiment of the invention is to provide an intermediate tread rubber layer with physical properties such as for example, stiffness, hysteresis and rebound physical properties similar to, and desirably better than, one or more of such physical properties of the tread outer rubber cap layer.

Indeed, the aspect of providing a tread cap lug which abridges two associated tread cap grooves of which the bottom portion extends radially inward into said intermediate tread rubber layer is considered herein to be significant because it provides a grooved underlying intermediate tread rubber layer which maximizes the use of the intermediate tread rubber layer to promote a reduction in cost of the overall tread without significantly affecting various aforesaid physical properties of the running surface of the tire during most of the service life of the tire tread.

In practice, a significant aspect of the invention is considered herein to be a synergistic combination of tread zones, or layers, for the overall tire tread. In this respect, the tire tread should not be considered as a simple tread composite of a relatively thick base and thin cap rubber layers but a combination of a tread rubber layers which include the intermediate tread rubber layer of this invention.

In one embodiment, said intermediate tread rubber layer extends radially outward into and within at least a portion of at least one of said tread lugs:

(A) to a level at or approximating the level of a physical treadwear indicator contained within a tread groove positioned between two of said tread lugs;
(B) to a level radially lower (thus deeper in the tread) than the level of a physical treadwear indicator contained within a tread groove positioned between two of said tread lugs; or
(C) to a level radially higher (thus higher in the tread) than the level a physical treadwear indicator contained within a tread groove positioned between two of said tread lugs.

Use of treadwear indicators in various tires to visually indicate the end of the intended service life of the tire tread is well known to those having skill in such art.

According to a preferred embodiment (embodiment B above), the top of the intermediate layer within the tread lug is lower than the tread wear indicator so that the intermediate layer does not become exposed to the tire tread's running surface at the end of the tire tread's intended service life.

In an alternate embodiment (embodiment A above), the intermediate tread rubber layer extends radially outward into and within at least a portion of at least one of said tread lugs such that the top of the intermediate layer is up to a treadwear indicator within the tread.

In an alternate embodiment, (embodiments A and/or C above) the combination of the grooved tread cap rubber layer and associated underlying intermediate rubber layer is considered herein to be synergistic in a sense that, as the outer tread cap layer wears away during the service of the tire, the underlying intermediate rubber layer becomes a portion of the running surface of the tread in a manner that the running surface can present one or more physical properties of the tread cap rubber layer and the intermediate tread rubber layer to the road.

The precipitated silica, if used in one or more of the tread rubber compositions, is normally used in combination with a coupling agent having a moiety reactive with hydroxyl groups contained on the surface of the silica (e.g. silanol groups) and another moiety interactive with said diene-based elastomers.

A coupling agent for such silica and for said microspheres of said intermediate tread rubber layer may, for example, be a bis(3-trialkoxysilylalkyl) polysulfide which contains an average of from 2 to 4, alternately an average of from 2 to 2.6 or an average of from 3.4 to 3.8, connecting sulfur atoms in its polysulfidic bridge. Representative of such coupling agent is for example, bis(3-triethoxysilylpropyl) polysulfide as being, for example, comprised of a bis(3-triethoxysilylpropyl) tetrasulfide, namely with the polysulfidic bridge comprised of an average of from 3.2 to 3.8 connecting sulfur atoms or a bis(3-triethoxysilylpropyl) disulfide with the polysulfidic bridge comprising an average of from 2.1 to 2.6 connecting sulfur atoms.

Alternately, such coupling agent may be an organomercaptosilane (e.g. an alkoxyorganomercaptosilane), and particularly an alkoxyorganomercaptosilane having its mercapto function capped.

In practice, the synthetic amorphous silica may be selected from aggregates of precipitated silica, which is intended to include precipitated aluminosilicates as a co-precipitated silica and aluminum.

The precipitated silica aggregates may be prepared, for example, by an acidification of a soluble silicate, e.g., sodium silicate, in the presence of a suitable electrolyte and may include co-precipitated silica and a minor amount of aluminum.

Such silicas might have a BET surface area, as measured using nitrogen gas, such as, for example, in a range of 40 to 600, and more usually in a range of 50 to 300 square meters per gram. The BET method of measuring surface area is described in the Journal of the American Chemical Society, Volume 60 (1938).

The silica might also have a dibutylphthalate (DBP) absorption value in a range of, for example, 50 to 400 cm$^3$/100g, alternately from 100 to 300cm$^3$/100g.

Various commercially available precipitated silicas may be considered for use in this invention such as silicas from PPG Industries under the Hi-Sil trademark with designations Hi-Sil 210 and Hi-Sil 243; silicas from Rhodia as, for example, Zeosil 1165MP and Zeosil 165GR, silicas from J. M. Huber Corporation as, for example, Zeopol 8745 and Zeopol 8715, silicas from Degussa AG with, for example, designations VN2, VN3 and Ultrasil 7005 as well as other grades of precipitated silica.

Various rubber reinforcing carbon blacks might be used for the tread rubber compositions. Representative of various rubber reinforcing blacks may be referred to by their ASTM designations such as for example, N110, N121 and N234. Other rubber reinforcing carbon blacks may be found, for example, in The Vanderbilt Rubber Handbook (1978), Page 417.

Representative of various diene-based elastomers for said tread cap rubber, said tread transition rubber layer and said base layer may include, for example, styrene-butadiene copolymers (prepared, for example, by organic solvent solution polymerization or by aqueous emulsion polymerization), isoprene/butadiene copolymers, styrene/isoprene/butadiene terpolymers and tin coupled organic solution polymerization prepared styrene/butadiene copolymers, cis 1,4-polyisoprene (including synthetic and natural cis 1,4-polyisoprene rubber) and cis 1,4-polybutadiene as well as trans 1,4-polybutadiene, 3,4-polyisoprene and high vinyl polybutadiene rubber.

Various glass or ceramic microspheres may be used such as, for example and without limitation, glass microspheres from the 3M company under the Scotchlite trademark such as, for example K46, S60, S60HS and iM30K, as well as glass microspheres from Potters Industries Inc. under the Sphericel trademark such as, for example, 60P18 and 110P8. Silane modified (pre-treated) glass microspheres, such as for example H50/10,000EPX™ from the 3M company, may also be used in the practice of this invention.

In one aspect of the practice of this invention, it is preferred that the microspheres, particularly the glass microspheres have a crush value of at least 5,000 psi (34.5 MPa), preferably at least 6,000 psi (41.4 MPa). For example, such microspheres, particularly the glass microspheres, may have a crush value in a range from 5,000 psi (34.5 MPa) to 50,000 psi (345 MPa).

The crush value may be determined by the applied isostatic pressure at which 90 percent of the microspheres survive without being crushed.

Brief Description of the Drawings

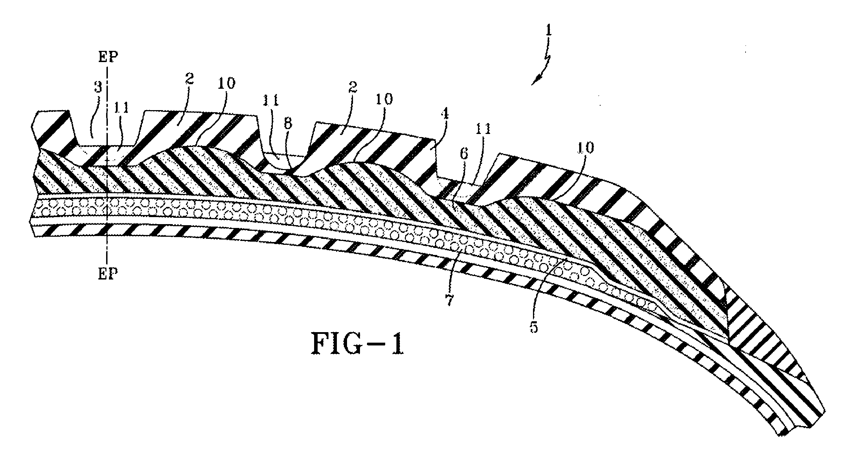

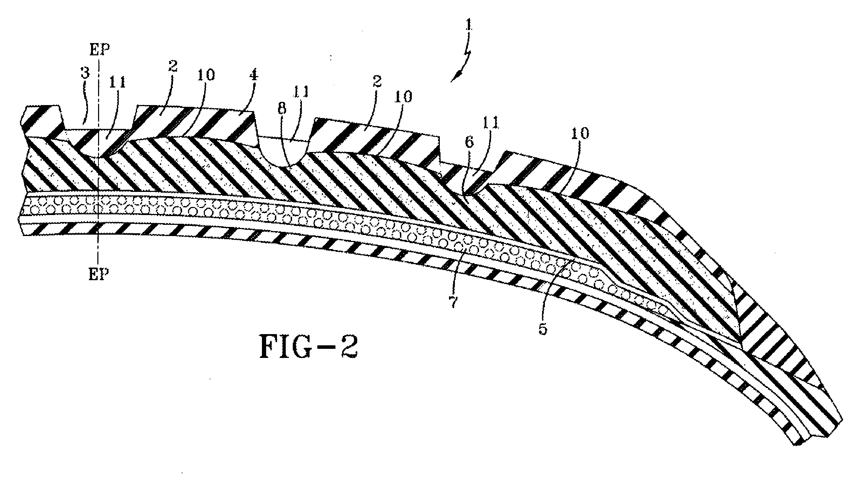

For a further understanding of this invention, drawings are provided in a form of FIGURE 1 and FIGURE 2 as partial cross-sectional views of a tire tread with an intermediate tread rubber layer which contains a dispersion of microspheres together with a coupling agent for the microspheres.

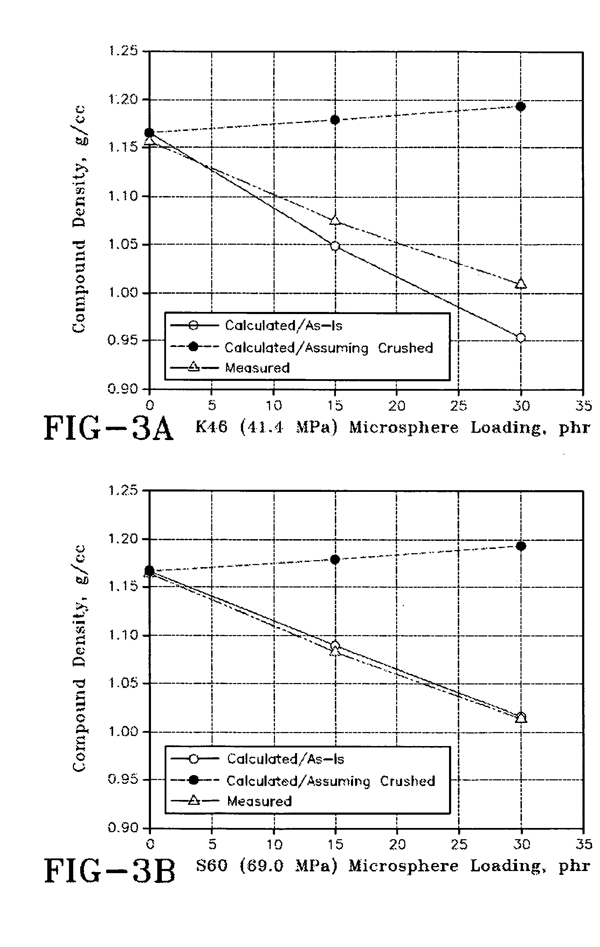

FIGURES 3A and 3B are provided to present a graphical comparison of (1) calculated and (2) measured rubber compound (rubber composition) densities which contained hollow glass microspheres with crush strengths (crush resistance) values of 41.4 MPa and 69 MPa, respectively.

The Drawings (FIG 1 and FIG 2)

FIG 1 depicts a tread configuration for a tire comprising a tread 1, lug 2 and groove 3 construction which comprises a tread outer cap rubber layer 4 containing said grooves 3 and lugs 2, with the tread lugs with running surfaces intended to be ground-contacting, a tread base rubber layer 5 and an internal intermediate tread rubber layer 6 underlying said tread outer cap layer 4 and therefore positioned between said tread cap layer 4 and said tread base rubber layer 5, as well as circumferential belt plies 7, which, for this configuration, is exclusive of the axially outer exposed surface of the tread in the shoulder region of the tire, wherein said intermediate layer 6 contains a dispersion of glass microspheres having a crush value of at least 6,000 psi (at least 41.4 MPa) and an average diameter in a range of from 10 to 50 microns. It is considered herein that the dispersion of glass hollow microspheres in the intermediate tread rubber layer 6 provides a significantly lighter rubber composition than the rubber composition of said tread cap rubber layer 4 and the composition of said tread base rubber layer 5.

From FIG 1 it can be seen that a bottom portion 8 of the grooves 3 extends radially inward within said tread cap layer 4. It can further be seen that the underlying tread intermediate rubber layer 6 extends internally radially outward into the tread lugs 2 to a position 10, and extent, of up to 10-20 percent of the height of the tread lugs 2 from the bottom 8 of the associated tread grooves 3 and approximating the radial height of the tread wear indicator 11 within at least one of said tread grooves 3. In such configuration, as the tread cap layer 4 wears away, the stylized tread wear indicator 11 is reached at approximately the same time as the intermediate tread layer 6 is reached in a manner that a portion of the intermediate layer can become a part of a running surface of the tire tread.

From FIG 2 it can be seen that the bottom portion 8 of the grooves 3 extends radially inward into the tread intermediate rubber layer 6 or, in other words, a portion of said intermediate rubber layer 6 encompasses the bottom portion 8 of said grooves 3 of said tread cap layer 4 which extend completely through said tread cap layer 4 and into the tread intermediate rubber layer 6. The internal height of the intermediate tread layer extends radially outward below a stylized tread wear indicator 11 in at least one of said tread grooves 3. In such configuration, as the tread cap layer 4 wears away, the intermediate tread layer 6 does not become a part of a running surface of the tire tread as the tread cap rubber layer is sufficiently worn to expose the tread wear indicator 11.

In FIG 2, it can be seen that the radial extension of the tread intermediate rubber layer 6 outward into the groove 3 is more inclusive of the portion of the wall of the associated grooves 3.

In practice, the rubber compositions for the tread rubber layers, including the tread intermediate rubber layer, may be prepared in at least one preparatory (non-productive) mixing step in an internal rubber mixer, often a sequential series of at least two separate and individual preparatory internal rubber mixing steps, or stages, in which the diene-based elastomer is first mixed with the prescribed silica and/or carbon black as the case may be followed by a final mixing step (productive mixing step) in an internal rubber mixer where curatives (sulfur and sulfur vulcanization accelerators) are blended at a lower temperature and for a substantially shorter period of time.

It is conventionally required after each internal rubber mixing step that the rubber mixture is actually removed from the rubber mixer and cooled to a temperature below 40˚C, perhaps to a temperature in a range of 20˚C to 40˚C and then added back to an internal rubber mixer for the next sequential mixing step, or stage.

The forming of a tire component is contemplated to be by conventional means such as, for example, by extrusion of rubber composition to provide a shaped, unvulcanized rubber component such as, for example, a tire tread.

It is understood that the tire, as a manufactured article, is prepared by shaping and sulfur curing the assembly of its components at an elevated temperature (e.g. 140˚C to 170˚C) and elevated pressure in a suitable mold.

It is readily understood by those having skill in the pertinent art that the rubber composition would be compounded by methods generally known in the rubber compounding art, such as mixing the various sulfur-vulcanizable constituent rubbers with various commonly used additive materials, as hereinbefore discussed, such as, for example, curing aids such as sulfur, activators, retarders and accelerators, processing additives, such as rubber processing oils, resins including tackifying resins, silicas, and plasticizers, fillers, pigments, fatty acid, zinc oxide, waxes, antioxidants and antiozonants, peptizing agents and reinforcing materials such as, for example, rubber reinforcing carbon black and synthetic amorphous silica, particularly precipitated silica. As known to those skilled in the art, depending on the intended use of the sulfur vulcanizable and sulfur vulcanized material (rubbers), the additives mentioned above are selected and commonly used in conventional amounts.

Representative non-aromatic rubber processing oils, if used, namely such oils which contain less than 15 weight percent aromatic compounds, if at all, are, and for example, contain 46 percent to 51 percent paraffinic content and 36 percent to 42 percent naphthenic content.

Typical amounts of fatty acids, if used which can include stearic acid, comprise 0.5 to 3 phr. Typical amounts of zinc oxide comprise 1 to 5 phr. Typical amounts of waxes comprise 1 to 5 phr. Typical amounts of peptizers comprise 0.1 to 1 phr. Typical peptizers may be, for example, pentachlorothiophenol and dibenzamidodiphenyl disulfide.

The vulcanization is conducted in the presence of a sulfur vulcanizing agent. Examples of suitable sulfur vulcanizing agents include elemental sulfur (free sulfur) or sulfur donating vulcanizing agents, for example, an amine disulfide, polymeric polysulfide or sulfur olefin adducts. Preferably, the sulfur vulcanizing agent is elemental sulfur. As known to those skilled in the art, sulfur vulcanizing agents are used in an amount ranging from 0.5 to 4 phr.

Accelerators are used to control the time and/or temperature required for vulcanization and to improve the properties of the vulcanizate. In one embodiment, a single accelerator system may be used, i.e., primary accelerator. Conventionally and preferably, a primary accelerator(s) is used in total amounts ranging from 0.5 to 4. In another embodiment, combinations of a primary and a secondary accelerator might be used with the secondary accelerator being used in smaller amounts (of 0.05 to 3 phr) in order to activate and to improve the properties of the vulcanizate. In addition, delayed action accelerators may be used which are not affected by normal processing temperatures but produce a satisfactory cure at ordinary vulcanization temperatures. Vulcanization retarders might also be used. Suitable types of accelerators that may be used in the present invention are amines, disulfides, guanidines, thioureas, thiazoles, thiurams, sulfenamides, dithiocarbamates and xanthates. Preferably, the primary accelerator is a sulfenamide. If a second accelerator is used, the secondary accelerator is preferably a guanidine, dithiocarbamate or thiuram compound.

The mixing of the rubber composition can preferably be accomplished by the aforesaid sequential mixing process. For example, the ingredients may be mixed in at least two sequential mixing stages, namely, at least one non-productive (preparatory) stage followed by a productive (final) mix stage. The final curatives are typically mixed in the final stage which is conventionally called the "productive" or "final" mix stage in which the mixing typically occurs at a temperature, or ultimate temperature, lower than the mix temperature(s) of the preceding non-productive mix stage(s).

## EXAMPLE I

Rubber compositions were prepared for evaluating an effect of an inclusion in a rubber composition of a dispersion of high crush strength glass microspheres, together with a coupling agent, for an intermediate layer for a tire tread.

Sample A is a Control rubber sample without a dispersion of glass microspheres and coupling agent.

Experimental rubber Samples B through E contained dispersions of various amounts of glass microspheres with or without a coupling agent.

The glass microspheres had a crush strength value of 6,000 psi (41.4 MPa).

The coupling agent was a composite of carbon black carrier and coupling agent comprising a bis(3-triethoxysilylpropyl) polysulfide (in a 50/50 weight ratio) having a average of from 2.1 to 2.6 connecting sulfur atoms in its polysulfidic bridge.

The rubber compositions were prepared by mixing the ingredients in sequential non-productive (NP) and productive (PR) mixing steps in one or more internal rubber mixers.

The basic recipe for the rubber Samples is presented in the following Table 1 and recited in parts by weight unless otherwise indicated.

**Table 1**

| **Non-Productive Mixing Step (NP), (mixed to 170°C)** | **Parts** |
| --- | --- |
| E-SBR rubber[1] | 96.25 (70 phr rubber) |
| Cis 1,4-polybutadiene rubber[2] | 30 |
| Carbon black (N120)[3] | 60 to 90 |
| Added rubber processing oil and microcrystalline wax[4] | 24.5 |
| Zinc oxide | 2 |
| Stearic acid[5] | 2 |
| Antidegradant[6] | 2.3 |

(continued)

| Non-Productive Mixing Step (NP), (mixed to 170˚C) | Parts |
|---|---|
| Hollow glass microspheres, crush strength of 41.4 MPa[7] | 0 to 30 |
| Coupling agent[8] | 0 to 1.8 |
| **Productive Mixing Step (PR), (mixed to 120˚C)** | |
| Sulfur | 0.9 |
| Sulfenamide and thiuram disulfide based cure accelerators | 3.5 |

[1]Emulsion polymerization prepared styrene/butadiene copolymer rubber (E-SBR) obtained as PLF1712C™ from The Goodyear Tire & Rubber Company having a bound styrene content of 23.5 percent and Tg (glass transition temperature) of -55˚C. The rubber was oil extended in a sense of containing 37.5 parts of rubber processing oil.
[2]Cis 1,4-polybutadiene rubber obtained as Budene 1207™ from The Goodyear Tire & Rubber Company having a cis 1,4- content of at least 97+ percent and a Tg of -106˚C.
[3]Rubber reinforcing carbon black as N120, an ASTM designation
[4]Microcrystalline wax
[5]Fatty acid comprising (or composed of) of at least 90 weight percent stearic acid and a minor amount of other fatty acid comprising (or composed of) of primarily of palmitic and oleic acids.
[6]Antidegradant of the phenylene diamine type
[7]Obtained as K46 from the 3M Company reportedly having a crush value of 6,000 psi (41.4 MPa), a true density of 0.46 g/cc and an average diameter of 40 microns.
[8]Obtained as X266S from the Degussa Company as a composite of carbon black (carrier) and coupling agent comprised of bis(3-triethoxysilylpropyl) polysulfide having an average in a range of from 2.1 to 2.5 connecting sulfur atoms in its polysulfidic bridge and reported in the table as the composite.

The following Table 2 illustrates cure behavior and various physical properties of rubber compositions based upon the basic recipe of Table 1.

**Table 2**

| | Samples | | | | |
|---|---|---|---|---|---|
| | **Control** | | | | |
| | **A** | **B** | **C** | **D** | **E** |
| Carbon black (phr) | 90 | 75 | 60 | 75 | 60 |
| Glass microspheres, crush strength | 0 | 15 | 30 | 15 | 30 |
| 41.4 MPa, (phr) | | | | | |
| Coupling agent (composite) (phr) | 0 | 0 | 0 | 0.9 | 1.8 |
| **Rheometer[1], 160˚C** | | | | | |
| Maximum torque (dNm) | 15.4 | 15 | 15.1 | 15.3 | 15.9 |
| Minimum torque (dNm) | 3.4 | 2.8 | 2.3 | 2.8 | 2.5 |
| Delta torque (dNm) | 12 | 12.2 | 12.8 | 12.5 | 13.4 |
| T90 (minutes) | 5.8 | 6.2 | 6.8 | 6.2 | 6.8 |

(continued)

| Stress-strain, ATS, 16 min, 160˚C[2] | | | | | |
|---|---|---|---|---|---|
| Tensile strength (MPa) | 17.2 | 12.1 | 8.2 | 11.4 | 7.1 |
| Elongation at break (%) | 657 | 643 | 640 | 574 | 503 |
| 100% ring modulus (MPa) | 1.4 | 1.3 | 1.2 | 1.5 | 1.7 |
| 300% ring modulus (MPa) | 6.1 | 4.0 | 2.6 | 5.9 | 5.3 |
| **Rebound** | | | | | |
| 23˚C | 25 | 29 | 34 | 29 | 35 |
| 100˚C | 42 | 46 | 50 | 46 | 52 |
| **Shore A Hardness** | | | | | |
| 23˚C | 73 | 68 | 63 | 69 | 67 |
| 100˚C | 57 | 54 | 52 | 56 | 57 |
| **RDS Strain sweep, 10 Hz, 60˚C[3]** | | | | | |
| Modulus G', at 0.5% strain (MPa) | 13.7 | 6.3 | 5.1 | 7 | 4.9 |
| Modulus G', at 10% strain (MPa) | 2.5 | 1.9 | 1.8 | 2 | 1.9 |
| Tan delta at 10% strain | 0.41 | 0.32 | 0.26 | 0.32 | 0.25 |
| **Density (rubber composition) (23˚C)(g/cc)** | | | | | |
| Measured | 1.16 | 1.07 | 1.01 | 1.07 | 1.00 |
| Calculated | 1.17 | 1.05 | 0.95 | 1.05 | 0.95 |

[1]Data according to Rubber Process Analyzer as RPA 2000™ instrument by Alpha Technologies, formerly of the Flexsys Company and formerly of the Monsanto Company.
[2]Data according to Automated Testing System instrument by the Instron Corporation which incorporates six tests in one system. Such instrument may determine ultimate tensile, ultimate elongation, moduli, etc. Data reported in the Table is generated by running the ring tensile test.
[3]Data by a rheometric spectrometric analytical instrument.

It can be seen from Table 2 that the room temperature and hot rebound properties of Experimental rubber Samples B through E significantly and progressively increased as the microsphere content of the rubber progressively increased, as compared to Control rubber Sample A which is beneficially predictive of a reduction of internal heat buildup in a tire tread intermediate layer and reduced rolling resistance (improved resistance to rolling) for the tire tread itself with an accompanying reduction in fuel consumption for an associated vehicle.

It can also be seen that the tan delta value (a hysteretic loss factor for the rubber sample) of Experimental rubber Samples B through E significantly reduced as compared to Control rubber Sample A which is beneficially predictive of reduced internal heat generation (because of reduction in hysteretic energy loss) in the rubber composition during its working in a tire tread intermediate layer.

It can further be seen that the tensile strength properties (100 percent and 300 percent moduli) were significantly beneficially increased for Experimental rubber Samples D and E which contained the coupling agent for the glass microspheres, as compared to Control rubber Sample A, and, further, as compared to Experimental rubber Samples B and C which did not contain the inclusion of the coupling agent. This is considered herein to be beneficial for a rubber composition to be used for a tread rubber layer.

This demonstrates the desirability and benefit of the use of the coupling agent with the glass microspheres and, moreover, demonstrates an undesirability of use of the glass microspheres without a coupling agent, for a tire tread intermediate rubber layer.

It can also be seen that measured density of the rubber composition containing the glass microsphere dispersion progressively reduced, although not to the extent of the calculated density or the rubber composition, as the microsphere concentration increased for Experimental rubber Samples B through E, as compared to Control rubber Sample A.

This indicates that a portion of the microspheres having a crush strength of 41.4 MPa became crushed during the high shear mixing of the rubber composition in the internal rubber mixer.

In general, this Example I demonstrates that both the weight and cost of a tire tread (and associated tire itself) which contains an outer tread cap rubber composition with a high silica reinforcement loading can be reduced by replacing a portion of the tread cap rubber layer with an intermediate tread rubber layer which contains a dispersion of glass microspheres with a significant portion of the tread rubber properties being maintained which is a feature not readily predictable without experimentation.

As discussed, it is interestingly seen that the measured densities of the rubber compositions of rubber Samples B through E (which contained the dispersions of glass microspheres) differed to a slight degree from each other although were substantially equivalent to each other. The calculated densities which mathematically took into account the inclusions of the glass microspheres in the rubber compositions assuming that none of microspheres became crushed. This demonstrates that the glass microspheres with an average crush value of 6,000 psi (41.4 MPa) were sufficiently strong to substantially and suitably survive the high sheer mixing of the rubber compositions in the internal rubber mixer.

## EXAMPLE II

Rubber compositions were prepared for evaluating an effect of an inclusion in a rubber composition of a dispersion of glass microspheres with a significantly higher crush strength of 10,000 psi (69 MPa), together with a coupling agent, for an intermediate layer for a tire tread.

Sample F is a Control rubber sample without a dispersion of glass microspheres and coupling agent.

Experimental rubber Samples G through J contained dispersions of various amounts of glass microspheres having a high crush strength together with or without a coupling agent.

Comparative rubber Sample K, which contained 73 phr of precipitated silica (together with a different silica coupling agent, namely a blocked organoalkoxymercaptosilane) and only 10 phr of rubber reinforcing carbon black, is included in this Example as a comparative rubber composition which is considered herein to be suitable for a tread cap rubber layer illustrated in the accompanying Example IV.

As indicated, the glass hollow microspheres had a crush strength value of 10,000 psi (69 MPa).

The rubber compositions were prepared by mixing the ingredients in sequential non-productive (NP) and productive (PR) mixing steps in one or more internal rubber mixers in the manner of Example I.

The basic recipe for the rubber Samples is presented in the following Table 3 and recited in parts by weight unless otherwise indicated.

### Table 3

| Non-Productive Mixing Step (NP), (mixed to 170°C) | Parts |
|---|---|
| E-SBR rubber[1] | 96.25 (70 phr rubber) |
| Cis 1,4-polybutadiene rubber[2] | 30 |
| Carbon black (N120)[3] | 60 to 90 |
| Rubber processing oil and microcrystalline wax[4] | 24.5 |
| Zinc oxide | 2 |
| Stearic acid[5] | 2 |
| Antidegradant[6] | 2.3 |
| Hollow glass microspheres, crush strength of 69 MPa[7] | 0 to 30 |
| Coupling agent[8] | 0 to 1.8 |
| Coupling agent (B)[9] | 6.5 (Sample K) |
| **Productive Mixing Step (PR), (mixed to 120°C)** | |
| Sulfur | 0.9 |

(continued)

| Productive Mixing Step (PR), (mixed to 120˚C) | |
|---|---|
| Sulfenamide and thiuram disulfide based cure accelerators | 3.5 |
| [7]Obtained as S60™ from the 3M company reportedly having a crush value of 10,000 psi (69 MPa), a true density of 0.60 g/cc and an average diameter of 30 microns. [8]Coupling agent as NXT™ from the Momentive Company as a blocked organoalkoxymercaptosilane | |

The materials used in the Example are the same as the referenced materials for Example II except for the hollow glass microspheres with higher crush strength, Silica and coupling agent for Experimental Sample K.

The following Table 4 illustrates cure behavior and various physical properties of rubber compositions based upon the basic recipe of Table 3.

**Table 4**

| | Samples | | | | | |
|---|---|---|---|---|---|---|
| | Control | | | | | |
| | **F** | **G** | **H** | I | **L** | **K** |
| Carbon black (phr) | 90 | 75 | 60 | 75 | 60 | 10 |
| Glass microspheres, crush strength 41.4 MPa, (phr) | 0 | 15 | 30 | 15 | 30 | 0 |
| Coupling agent (composite) (phr) | 0 | 0 | 0 | 0.9 | 1.8 | 0 |
| Coupling agent (B) (phr) | 0 | 0 | 0 | 0 | 0 | 6.5 |
| Silica (phr) | 0 | 0 | 0 | 0 | 0 | 73 |
| **Rheometer[1], 160˚C** | | | | | | |
| Maximum torque (dNm) | 15.6 | 14.8 | 14.3 | 15 | 15.3 | 21.8 |
| Minimum torque (dNm) | 3.6 | 2.8 | 2.2 | 2.8 | 2.5 | 2.9 |
| Delta torque (dNm) | 12 | 12 | 12.1 | 12.2 | 12.8 | 18.9 |
| T90 (minutes) | 6.4 | 3.9 | 2.5 | 5.9 | 5.0 | 8.4 |
| **Stress-strain, ATS, 16 min, 160˚C[2]** | | | | | | |
| Tensile strength (MPa) | 17 | 12.5 | 8.8 | 12.6 | 8.7 | 18.1 |
| Elongation at break (%) | 653 | 661 | 669 | 626 | 592 | 589 |
| 100% ring modulus (MPa) | 1.4 | 1.3 | 1.1 | 1.4 | 1.5 | 1.9 |
| 300% ring modulus (MPa) | 6.1 | 3.9 | 2.5 | 5.9 | 5 | 8.4 |
| **Rebound** | | | | | | |
| 23˚C | 26 | 29 | 34 | 29 | 34 | 36 |
| 100˚C | 56 | 54 | 51 | 55 | 55 | 63 |
| **Shore A Hardness** | | | | | | |
| 23˚C | 70 | 68 | 64 | 69 | 66 | 71 |
| 100˚C | 56 | 54 | 51 | 55 | 55 | 63 |

(continued)

| RDS Strain sweep, 10 Hz, 60˚C[3] | | | | | | |
|---|---|---|---|---|---|---|
| Modulus G', at 0.5% strain (MPa) | 8.1 | 5.9 | 3.9 | 6.0 | 4.5 | 4.9 |
| Modulus G', at 10% strain (MPa) | 1.9 | 1.7 | 1.5 | 1.7 | 1.7 | 2.2 |
| Tan delta at 10% strain | 0.36 | 0.31 | 0.25 | 0.30 | 0.24 | 0.17 |
| **Density (rubber composition) (23˚C)(g/cc)** | | | | | | |
| Measured | 1.17 | 1.08 | 1.04 | 1.08 | 1.05 | 1.20 |
| Calculated | 1.17 | 1.08 | 1.01 | 1.08 | 1.01 | 1.19 |

The test procedures were the same as those for Example I.

It can be seen from Table 4 that the room temperature and hot rebound properties of Experimental rubber Samples G through J significantly and progressively increased as the microsphere content of the rubber progressively increased, as compared to Control rubber Sample F which is beneficially predictive of a reduction of internal heat buildup in a tire tread intermediate layer and reduced rolling resistance (improved "less" resistance to rolling) for the tire tread itself with an accompanying reduction in fuel consumption for an associated vehicle.

It can also be seen that the tan delta value (a hysteretic loss factor for the rubber sample) of Experimental rubber Samples G through J significantly reduced as compared to Control rubber Sample F which is beneficially predictive of reduced internal heat generation (because of reduction in hysteretic energy loss) in the rubber composition during its working in a tire tread intermediate layer.

It can further be seen that the tensile strength properties (100 percent and 300 percent moduli) were significantly beneficially increased for Experimental rubber Samples I and J which contained the coupling agent for the glass microspheres, as compared to Control rubber Sample F, and, further, as compared to Experimental rubber Samples G and H which did not contain the inclusion of the coupling agent. This is considered herein to be beneficial for a rubber composition to be used for a tread rubber layer.

This demonstrates the desirability and benefit of the use of the coupling agent with the glass microspheres and, moreover, demonstrates an undesirability of use of the glass microspheres without a coupling agent, for a tire tread intermediate rubber layer.

It can also be seen that density of the rubber composition containing the glass microsphere dispersion (crush strength of 10,000 psi, or 69 MPa) progressively reduced as the microsphere concentration increased for Experimental rubber Samples G through J, as compared to Control rubber Sample F which demonstrates that both the weight and cost of a tire tread (and associated tire itself) which contains an outer tread cap rubber composition with a high silica reinforcement loading by replacing a portion of the tread cap rubber layer with an intermediate tread rubber layer which contains a dispersion of glass microspheres.

It can be seen that the measured densities of the rubber compositions of rubber Samples which contained the glass microspheres S60 which had a reported crush strength of 10,000 psi (69 MPa) is basically equal to the calculated densities which mathematically took into account the inclusions of the glass microspheres in the rubber compositions. This demonstrates that the glass microspheres were sufficiently strong to survive the high sheer mixing of the rubber compositions in the internal rubber mixer.

The Drawings (relating to Example I and Example II)

As hereinbefore mentioned, FIG 3A and FIG 3B are provided to present a graphical comparison of

    (1) calculated rubber compound (rubber composition) density, and
    (2) measured rubber compound (rubber composition) density

which contained hollow glass microspheres with crush strengths (crush resistance) values of 41.4 MPa (the K46 glass hollow microspheres) for FIG 3A, and 69 MPa (the S60 glass hollow microspheres) for FIG 3B.

For FIG 3A, for high shear mixing of the rubber composition in an internal rubber mixer, it is seen that as the content of the glass microspheres (having a crush strength of 41.4 MPa) is increased:

    (1) the calculated density of the rubber composition predictably increases where it is assumed that the glass microspheres are completely crushed as a result of the high shear mixing.
    (2) the calculated density of the rubber composition predictably decreases where it is assumed that the glass microspheres are not crushed during the high shear mixing.

(3) the measured density of the rubber composition decreases at a rate slightly less than the predicted rate of decrease which thereby shows that a portion of the glass microspheres become crushed during the high shear mixing when the glass microspheres had a crush strength of 41.4 MPa.

An indication of percent of microspheres which are at least partially crushed in the rubber composition (the compound) containing the hollow microspheres (K46) having a crush strength of 6,000 psi (41.4 MPa) is as follows, as taken from FIG 3A:

| Microsphere (K46) content, 6,000 psi (41.4 MPa) crush strength, (phr) | 15 | 30 |
|---|---|---|
| Percent of microspheres crushed (%) | 21 | 24 |

The percent of at least partially crushed microspheres was estimated by the following equation with data taken from FIG 3A:

$$\text{Percent microspheres at least partially crushed} = 100 \times ((\text{measured compound density} - \text{calculated compound density assuming no microspheres crushed})/(\text{calculated compound density assuming microspheres fully crushed} - \text{calculated compound density assuming no microspheres crushed})).$$

In FIG 3B, for high shear mixing of the rubber composition in an internal rubber mixer, it is seen that as the content in the rubber composition of the glass microspheres (having a greater crush strength of 69 MPa) is increased:

(1) as in FIG 3A, the calculated density of the rubber composition predictably increases where it is assumed that the glass microspheres are completely crushed as a result of the high shear mixing.
(2) as in FIG 3A, the calculated density of the rubber composition predictably decreases where it is assumed that the glass microspheres are not crushed during the high shear mixing.
(3) the measured density of the rubber composition decreases at a rate almost identical to the calculated rate of decrease which thereby shows that only a minimal portion, if any, of the glass microspheres become crushed during the high shear mixing when the glass microspheres had a crush strength of 69 MPa.

It is thereby concluded herein that a percent of glass microspheres having a threshold crush strength of 6,000 psi (41.4 MPa) which are in a form of being at least partially crushed in the rubber composition may be up to 30 percent (the partial crushing of the microspheres being accomplished in situ within the rubber composition caused by the high sheer mixing of the rubber composition).

It may be preferred that up to only 10 percent of the glass microspheres are in a state of being at least partially crushed, (the partial crushing of the microspheres being accomplished in situ within the rubber composition caused by the high sheer mixing of the rubber composition), particularly when hollow glass microspheres having a crush strength greater than 6,000 psi (41.4 MPa) are used such as for example the hollow glass microspheres exemplified in FIG 3 having a greater crush strength of 10,000 psi (69 MPa) in the rubber composition.

It can readily be seen that from these Examples as well as the illustrative accompanying FIG 3A and FIG 3B that the desired threshold crush strength of the hollow microspheres is not readily predictable without experimentation, particularly for use in a rubber composition for a tire tread intermediate layer.

## EXAMPLE III

Rubber compositions were prepared for evaluating an effect of an inclusion in a rubber composition of a dispersion of high crush strength glass microspheres, together with a coupling agent, for an intermediate layer for a tire tread.

Sample L is a Control rubber sample without a dispersion of glass microspheres and coupling agent. Except for Comparative Rubber Sample K (illustrated Table 4 of Example I) the elastomers were composed of a cis 1,4-polybutadiene rubber together with a cis 1,4-polyisoprene natural rubber (instead of the E-SBR of Example II) to promote a lower tread rolling resistance and a higher tread tear resistance for the rubber composition.

Experimental rubber Samples M through O contained dispersions of various amounts of glass microspheres together with or without a coupling agent.

Comparative rubber Sample K, previously presented in Table 4 of Example II, which contained 73 phr of precipitated silica (together with a different silica coupling agent) and only 10 phr of rubber reinforcing carbon black, and elastomers composed of cis 1,4-polybutadiene rubber and S-SBR (solution polymerization prepared styrene/butadiene rubber, is included in this Example as a comparative rubber composition which might be suitable for a tread cap rubber layer.

The glass microspheres had a high crush strength value of 18,000 psi (124 MPa).

The rubber compositions were prepared by mixing the ingredients in sequential non-productive (NP) and productive (PR) mixing steps in one or more internal rubber mixers.

The basic recipe for the rubber Samples is presented in the following Table 5 and recited in parts by weight unless otherwise indicated.

**Table 5**

| Non-Productive Mixing Step (NP), (mixed to 170˚C) | Parts |
|---|---|
| Cis 1,4-polyisoprene natural rubber[10] | 70 |
| Cis 1,4-polybutadiene rubber (except for Sample K)[2] | 30 |
| Carbon black (N120)[3] | 35 to 60 |
| Rubber processing oil and microcrystalline wax[4] | 9.5 |
| Zinc oxide | 2 |
| Stearic acid[5] | 2 |
| Antidegradant[6] | 2.3 |
| Hollow glass microspheres[11] | 0 to 25 |
| Coupling agent[8] | 0 to 1.5 |
| Coupling agent (B)[9] | 6.5 for Sample K |
| **Productive Mixing Step (PR), (mixed to 120˚C)** | |
| Sulfur | 0.9 |
| Sulfenamide and thiuram disulfide based cure accelerators | 2.5 |
| [10]MR20 having a cis 1,4- content of 99.8 percent and a Tg of -65˚C. [11]Obtained as S60HS™ from the 3M Company reportedly having a crush value of 18,000 psi (124 MPa), a true density of 0.60 g/cc and an average diameter of 30 microns. | |

The materials used in the Example are the same as the referenced materials for Example II except for the hollow glass microspheres 11 and the use of cis 1,4-polyisoprene natural rubber 10 instead of E-SBR.

The following Table 6 illustrates cure behavior and various physical properties of rubber compositions based upon the basic recipe of Table 5.

**Table 6**

| | Samples | | | | |
|---|---|---|---|---|---|
| | Control | | | | |
| | **L** | **M** | **N** | **D** | **E** |
| Carbon black (phr) | 60 | 55 | 45 | 35 | 10 |
| Glass microspheres, crush strength 124 MPa, (phr) | 0 | 5 | 15 | 25 | 0 |
| Coupling agent (composite) (phr) | 0 | 0.6 | 0.9 | 1.5 | 0 |
| Silica (phr) | 0 | 0 | 0 | 0 | 73 |
| Coupling agent B (phr) | 0 | 0 | 0 | 0 | 6.5 |

(continued)

| Rheometer[1], 160˚C | | | | | |
|---|---|---|---|---|---|
| Maximum torque (dNm) | 22.9 | 22.6 | 22.6 | 22.7 | 20.9 |
| Minimum torque (dNm) | 4.2 | 3.7 | 3.1 | 2.3 | 2.8 |
| Delta torque (dNm) | 18.7 | 18.9 | 19.5 | 20.4 | 18.1 |
| T90 (minutes) | 3.9 | 4.2 | 4.4 | 4.5 | 8.7 |
| **Stress-strain, ATS, 16 min, 160˚C[2]** | | | | | |
| Tensile strength (MPa) | 22.0 | 19.2 | 14.8 | 11.5 | 18.3 |
| Elongation at break (%) | 497 | 487 | 478 | 477 | 594 |
| 100% ring modulus (MPa) | 2.1 | 2.1 | 2.1 | 2.1 | 1.9 |
| 300% ring modulus (MPa) | 12.1 | 10.5 | 8 | 6.1 | 8.1 |
| **Rebound** | | | | | |
| 23˚C | 41 | 44 | 49 | 54 | 36 |
| 100˚C | 56 | 60 | 65 | 69 | 58 |
| **Shore A Hardness** | | | | | |
| 23˚C | 73 | 73 | 71 | 7 | 71 |
| 100˚C | 63 | 64 | 63 | 63 | 64 |
| **RDS Strain sweep, 10 Hz, 60˚C[3]** | | | | | |
| Modulus G', at 0.5% strain (MPa) | 7.2 | 6.2 | 4.7 | 3.2 | 5.6 |
| Modulus G', at 10% strain (MPa) | 2.2 | 2.2 | 2.1 | 1.9 | 2.4 |
| Tan delta at 10% strain | 0.25 | 0.23 | 0.17 | 0.13 | 0.18 |
| **Density (rubber composition) (23˚C)(g/cc)** | | | | | |
| Measured | 1.11 | 1.08 | 1.02 | 0.97 | 1.19 |
| Calculated | 1.17 | 1.08 | 1.02 | 0.96 | 1.19 |

The test procedures were the same as those for Example I.

It can be seen from Table 6 that the room temperature and hot rebound properties of Experimental rubber Samples M through O significantly and progressively increased as the microsphere content of the rubber progressively increased, as compared to Control rubber Sample L which is beneficially predictive of a reduction of internal heat buildup in a tire tread intermediate layer and reduced rolling resistance (improved "less" resistance to rolling) for the tire tread itself with an accompanying reduction in fuel consumption for an associated vehicle. The rebound physical properties (both room temperature and hot rebound properties) of Experimental rubber Samples M through O were even better than the silica-rich rubber Sample K.

It can also be seen that the tan delta values (a hysteretic loss factor for the rubber sample) of Experimental rubber Samples M through O are significantly reduced as compared to Control rubber Sample L which is beneficially predictive of reduced internal heat generation (because of reduction in hysteretic energy loss) in the rubber composition during its working in a tire tread intermediate layer. The tan delta values of Experimental rubber Samples N and O were even better than the silica-rich rubber Sample K.

It can also be seen that density of the rubber composition containing the glass microsphere dispersion progressively reduced as the microsphere concentration increased for Experimental rubber Samples M through O, as compared to Control rubber Sample L which demonstrates that both the weight and cost of a tire tread (and associated tire itself) which contains an outer tread cap rubber composition with a high silica reinforcement loading by replacing a portion of the tread cap rubber layer with an intermediate tread rubber layer which contains a dispersion of glass microspheres.

It can be seen that the measured densities of the rubber compositions of rubber Samples which contained the glass microspheres S60HS which had a reported crush strength of 18,000 psi (124.11 MPa) is equal to the calculated densities which mathematically took into account the inclusions of the glass microspheres in the rubber compositions.

This demonstrates that the glass microspheres were sufficiently strong to survive the high sheer mixing of the rubber compositions in the internal rubber mixer.

### EXAMPLE IV

Pneumatic tires of size P205/70R15 were built and cured with a tread configuration similar to FIG 1 in a sense that the tread was composed of an outer tread cap layer with lugs and grooves and a running surface, an intermediate tread rubber layer and an underlying tread base rubber layer.

The tires are identified as Tires Q, R, S and T.

Tire Q is a Control tire with rubber Sample K as both the tread cap rubber layer and the tread intermediate rubber layer.

Tires R, S and T had rubber Sample K as the tread cap rubber layer

Tires R, S and T had rubber Samples F, I and J, respectively, as an intermediate tread rubber layer underlying the tread cap rubber layer as shown in Example II.

The intermediate rubber layers were approximately 33 percent (or in a range of from 25 to 40 percent) of the volume of the tire tread (the combination of tread cap rubber layer, intermediate tread rubber layer and tread base rubber layer).

The uncured tread cap rubber layer, intermediate tread rubber layer and tread base rubber layer were formed by co-extrusion to form an integral tread configuration so that when the tire assembly was cured in a tire mold, they became an integral configuration.

The performance of the tires is shown in the following Table 7.

**Table 7**

| | Tires | | | |
|---|---|---|---|---|
| | **Control** | | | |
| | **Q** | **R** | **S** | **T** |
| Tread cap rubber layer (rubber Sample) | K | K | K | K |
| Intermediate tread rubber layer (rubber Sample) | K | F | I | J |
| **Tire Rolling Resistance ( a higher number, as used herein, is better in a sense of indicating lower rolling resistance)** | | | | |
| Relative to Control Q Tire (percent) | 100 | 101 | 104 | 104 |
| Ranking relative to Control Q Tire | | equal | better | better |
| **Tire Wet Handling** | | | | |
| Relative to Control Q Tire (percent) | 100 | 97 | 100 | 100 |
| Ranking relative to Control Q Tire | | worse | equal | equal |
| **Tire Dry Handling** | | | | |
| Relative to Control Q Tire (percent) | 100 | 104 | 102 | 102 |
| Ranking relative to Control Q Tire | | better | better | better |

It can be seen from Table 7 that the inclusion of the tread intermediate rubber layer containing a dispersion of hollow glass microspheres led to tires (Tires R, S and T) with reduced rolling resistance (higher reported relative values, as used herein, indicates lower, or reduced, rolling resistance) while other tire performances such as wet handling and dry handling were either maintained or slightly improved.

### Claims

1.   A tire having a rubber tread comprising an outer tread cap rubber layer (4) and an underlying intermediate tread rubber layer (6) positioned between said outer tread cap rubber layer (4) and an underlying tread base rubber layer (5);

wherein said outer tread cap rubber layer (4) is a lug and groove configuration with raised lugs having tread running surfaces and grooves positioned between said lugs; and

wherein said intermediate tread rubber layer (6) comprises at least one diene-based elastomer which contains a dispersion of hollow microspheres and a coupling agent having a moiety interactive with said microspheres and another different moiety interactive with said diene-based elastomers.

2. The tire of claim 1 wherein said microspheres have a crush strength of at least 34.5MPa.

3. The tire of claim 1 or 2 wherein said microspheres have a crush strength in a range of from 34.5 MPa to 345 MPa.

4. The tire of at least one of the previous claims wherein said microspheres have an average diameter in a range of from 10 to 50 microns.

5. The tire of at least one of the previous claims wherein said intermediate tread rubber layer (6) is a rubber composition comprising, based upon parts by weight per 100 parts by weight rubber (phr):

   (A) 100 phr of at least one conjugated diene-based elastomer;
   (B) from 5 to 50 phr of a dispersion of at least one of glass hollow microspheres and ceramic hollow microspheres, and
   (C) a coupling agent having a moiety reactive with hydroxyl groups contained on said microspheres and another different moiety interactive with said conjugated diene-based elastomer(s).

6. The tire of at least one of the previous claims wherein said tread intermediate rubber layer (6) contains from 30 to 90 phr of a filler reinforcement selected from:

   (A) rubber reinforcing carbon black;
   (B) silica, preferably precipitated silica; or
   (C) a combination of rubber reinforcing carbon black and silica, preferably precipitated silica.

7. The tire of at least one of the previous claims wherein said tread outer cap rubber layer (4) contains from 40 to 120 phr of a filler reinforcement selected from:

   (A) rubber reinforcing carbon black;
   (B) silica, preferably precipitated silica; or
   (C) a combination of rubber reinforcing carbon black and silica, preferably precipitated silica.

8. The tire of at least one of the previous claims wherein said intermediate tread rubber layer (6) extends radially outward into and within at least a portion of at least one of said tread lugs to a level at or approximating the level of a physical treadwear indicator (11) contained within a tread groove positioned between two of said tread lugs.

9. The tire of at least one of the claims 1 to 7 wherein said intermediate tread rubber layer extends radially outward into and within at least a portion of at least one of said tread lugs to a level radially lower than the level of a physical treadwear indicator contained within a tread groove positioned between two of said tread lugs.

10. The tire of at least one of the claims 1 to 7 wherein said intermediate tread rubber layer extends radially outward into and within at least a portion of at least one of said tread lugs to a level radially higher than the level of a physical treadwear indicator contained within a tread groove positioned between two of said tread lugs.

11. The tire of at least one of the previous claims wherein up to 30 percent of the microspheres in the rubber composition are in a state of being at least partially crushed.

12. The tire of claim 11 wherein the partial crushing of said microspheres is accomplished in situ within the rubber composition caused by a high sheer mixing of the rubber composition.

13. The tire of at least one of the previous claims wherein the hollow microspheres are at least one of:

   (i) glass hollow microspheres
   (ii) ceramic hollow microspheres

(iii) hollow microspheres of a plastic or synthetic material or of a mixture thereof.

14. The tire of claim 13 wherein the hollow microspheres are glass hollow microspheres.

**Patentansprüche**

1. Reifen mit einer Gummilauffläche, umfassend eine äußere Laufstreifenoberteil-Gummilage (4) und eine darunterliegende Laufstreifengummi-Zwischenlage (6), die zwischen besagter äußerer Laufstreifenoberteil-Gummilage (4) und einer darunterliegenden Laufstreifenunterteil-Gummilage (5) positioniert ist;
wobei die äußere Laufstreifenoberteil-Gummilage (4) eine Stollen- und Rillenkonfiguration mit erhabenen Stollen, die Profillaufflächen aufweisen, und zwischen besagten Stollen positionierten Rillen ist;
wobei die Laufstreifengummi-Zwischenlage (6) mindestens ein dienbasiertes Elastomer umfasst, das eine Dispersion hohler Mikrokügelchen und einen Haftvermittler enthält, der einen Anteil, der mit besagten Mikrokügelchen in Wechselwirkung tritt, und einen anderen, unterschiedlichen Anteil, der mit besagten dienbasierten Elastomeren in Wechselwirkung tritt, hat.

2. Reifen nach Anspruch 1, wobei die Mikrokügelchen eine Druckfestigkeit von mindestens 34,5 MPa aufweisen.

3. Reifen nach Anspruch 1 oder 2, wobei die Mikrokügelchen eine Druckfestigkeit in einem Bereich von 34,5 MPa bis 345 MPa aufweisen.

4. Reifen nach mindestens einem der vorgenannten Ansprüche, wobei die Mikrokügelchen einen durchschnittlichen Durchmesser in einem Bereich von 10 bis 50 Mikron aufweisen.

5. Reifen nach mindestens einem der vorgenannten Ansprüche, wobei die Laufstreifengummi-Zwischenlage (6) eine Kautschukzusammensetzung ist, umfassend, auf Basis von Gewichtsteilen je 100 Gewichtsteile (ThK):

   (A) 100 ThK mindestens eines Elastomers auf Basis konjugierten Diens;
   (B) 5 bis 50 ThK einer Dispersion mindestens eines von hohlen Glas-Mikrokügelchen und hohlen Keramik-Mikrokügelchen, und
   (C) einen Haftvermittler mit einem Anteil, der mit auf den Mikrokügelchen enthaltenen Hydroxylgruppen reaktiv ist, und einem anderen, unterschiedlichen Anteil, der mit dem Elastomer bzw. den Elastomeren auf Basis konjugierten Diens in Wechselwirkung tritt.

6. Reifen nach mindestens einem der vorgenannten Ansprüche, wobei die Laufstreifengummi-Zwischenlage (6) 30 bis 90 ThK einer Füllstoffverstärkung enthält, ausgewählt aus:

   (A) Kautschukverstärkungs-Carbon Black;
   (B) Silika, bevorzugt ausgefälltem Silika; oder
   (C) einer Kombination von Kautschukverstärkungs-Carbon Black und Silika, bevorzugt ausgefälltem Silika.

7. Reifen nach mindestens einem der vorgenannten Ansprüche, wobei die Laufstreifenoberteil-Gummilage (4) 40 bis 120 ThK einer Füllstoffverstärkung enthält, ausgewählt aus:

   (A) Kautschukverstärkungs-Carbon Black;
   (B) Silika, bevorzugt ausgefälltem Silika; oder
   (C) einer Kombination von Kautschukverstärkungs-Carbon Black und Silika, bevorzugt ausgefälltem Silika.

8. Reifen nach mindestens einem der vorgenannten Ansprüche, wobei die Laufstreifengummi-Zwischenlage (6) sich radial auswärts in und innerhalb mindestens eines Teils mindestens eines der Profilstollen bis auf eine Höhe oder annähernd die Höhe eines materiellen Profilabnutzungsindikators (11) erstreckt, der in einer Profilrille enthalten ist, die zwischen zwei der Profilstollen positioniert ist.

9. Reifen nach mindestens einem der Ansprüche 1 bis 7, wobei die Laufstreifengummi-Zwischenlage sich radial auswärts in und innerhalb mindestens eines Teils mindestens eines der Profilstollen bis auf eine Höhe erstreckt, die radial niedriger liegt als die Höhe eines materiellen Profilabnutzungsindikators, der in einer Profilrille enthalten ist, die zwischen zwei der Profilstollen positioniert ist.

**10.** Reifen nach mindestens einem der Ansprüche 1 bis 7, wobei die Laufstreifengummi-Zwischenlage sich radial auswärts in und innerhalb mindestens eines Teils mindestens eines der Profilstollen bis auf eine Höhe erstreckt, die radial höher liegt als die Höhe eines materiellen Profilabnutzungsindikators, der in einer Profilrille enthalten ist, die zwischen zwei der Profilstollen positioniert ist.

**11.** Reifen nach mindestens einem der vorgenannten Ansprüche, wobei bis zu 30 Prozent der Mikrokügelchen in der Kautschukzusammensetzung in einem mindestens teilweise zerdrückten Zustand vorliegen.

**12.** Reifen nach Anspruch 11, wobei das teilweise Zerdrücken der Mikrokügelchen in situ in der Kautschukzusammensetzung vollzogen wird, verursacht durch ein mit hoher Scherkraft Mischen der Kautschukzusammensetzung.

**13.** Reifen nach mindestens einem der vorgenannten Ansprüche, wobei die hohlen Mikrokügelchen mindestens eines sind von:

(i) hohlen Glas-Mikrokügelchen
(ii) hohlen Keramik-Mikrokügelchen
(iii) hohlen Mikrokügelchen aus einem Kunststoff- oder Synthetikmaterial oder aus einer Mischung davon.

**14.** Reifen nach Anspruch 13, wobei die hohlen Mikrokügelchen hohle Glas-Mikrokügelchen sind.

## Revendications

**1.** Bandage pneumatique possédant une bande de roulement en caoutchouc comprenant une couche externe en caoutchouc (4) pour le recouvrement de la bande de roulement et une couche de caoutchouc de bande de roulement intermédiaire sous-jacente (6) qui vient se disposer entre ladite couche externe en caoutchouc (4) pour le recouvrement de la bande de roulement et une couche de caoutchouc de base de bande de roulement sous-jacente (5) ; dans lequel ladite couche externe en caoutchouc (4) pour le recouvrement de la bande de roulement possède une configuration du type à barrettes et à rainures comprenant des barrettes dressées possédant des surfaces de roulement de la bande de roulement et des rainures disposées entre lesdites barrettes ; et
dans lequel ladite couche de caoutchouc de bande de roulement intermédiaire (6) comprend au moins un élastomère à base diénique qui contient une dispersion de microsphères creuses et un agent de couplage possédant une fraction apte à entrer en interaction avec lesdites microsphères et une autre fraction différente à entrer en interaction avec lesdits élastomères à base diénique.

**2.** Bandage pneumatique selon la revendication 1, dans lequel lesdites microsphères possèdent une résistance à l'écrasement s'élevant à au moins 34,5 MPa.

**3.** Bandage pneumatique selon la revendication 1 ou 2, dans lequel lesdites microsphères possèdent une résistance à l'écrasement dans la plage de 34,5 MPa à 345 MPa.

**4.** Bandage pneumatique selon au moins une des revendications précédentes, dans lequel lesdites microsphères possèdent un diamètre moyen dans la plage de 10 à 50 microns.

**5.** Bandage pneumatique selon au moins une des revendications précédentes, dans lequel ladite couche de caoutchouc de bande de roulement intermédiaire (6) possède une composition de caoutchouc comprenant, en se basant sur des parties en poids par 100 parties en poids de caoutchouc (phr) :

(A) à concurrence de 100 phr, au moins un élastomère à base de diène conjugué ;
(B) à concurrence de 5 à 50 phr, une dispersion d'au moins un membre choisi parmi le groupe comprenant des microsphères creuses en verre et des microsphères creuses en céramique ; et
(C) un agent de couplage possédant une fraction apte à réagir avec des groupes hydroxyle contenus sur lesdites microsphères et une autre fraction différente à entrer en interaction avec ledit/lesdits élastomères à base de diènes conjugués.

**6.** Bandage pneumatique selon au moins une des revendications précédentes, dans lequel ladite couche de caoutchouc de bande de roulement intermédiaire (6) contient, à concurrence de 30 à 90 phr, un renforcement fourni par une matière de charge choisie parmi le groupe comprenant :

(A) du noir de carbone pour le renforcement du caoutchouc ;
(B) de la silice, de préférence de la silice précipitée ; ou
(C) une combinaison de noir de carbone pour le renforcement du caoutchouc est de la silice, de préférence de la silice précipitée.

**7.** Bandage pneumatique selon au moins une des revendications précédentes, dans lequel ladite couche externe en caoutchouc (4) pour le recouvrement de la bande de roulement contient, à concurrence de 40 à 120 phr, un renforcement fourni par une matière de charge choisie parmi le groupe comprenant :

(A) du noir de carbone pour le renforcement du caoutchouc ;
(B) de la silice, de préférence de la silice précipitée ; ou
(C) une combinaison de noir de carbone pour le renforcement du caoutchouc est de la silice, de préférence de la silice précipitée.

**8.** Bandage pneumatique selon au moins une des revendications précédentes, dans lequel ladite couche de caoutchouc de bande de roulement intermédiaire (6) s'étend en direction radiale vers l'extérieur dans et au sein d'au moins une portion d'au moins une desdites barrettes de bande de roulement jusqu'à un niveau correspondant à un indicateur physique d'usure de bande de roulement (11) ou jusqu'à un niveau s'approchant du niveau en question, ledit indicateur étant prévu dans une rainure de bande de roulement disposée entre deux desdites barrettes de bande de roulement.

**9.** Bandage pneumatique selon au moins une des revendications 1 à 7, dans lequel ladite couche de caoutchouc de bande de roulement intermédiaire s'étend en direction radiale vers l'extérieur dans et au sein d'au moins une portion d'au moins une desdites barrettes de bande de roulement jusqu'à un niveau inférieur en direction radiale au niveau d'un indicateur physique d'usure de bande de roulement prévu dans une rainure de bande de roulement disposée entre deux desdites barrettes de bande de roulement.

**10.** Bandage pneumatique selon au moins une des revendications 1 à 7, dans lequel ladite couche de caoutchouc de bande de roulement intermédiaire s'étend en direction radiale vers l'extérieur dans et au sein d'au moins une portion d'au moins une desdites barrettes de bande de roulement jusqu'à un niveau supérieur en direction radiale au niveau d'un indicateur physique d'usure de bande de roulement prévu dans une rainure de bande de roulement disposée entre deux desdites barrettes de bande de roulement.

**11.** Bandage pneumatique selon au moins une des revendications précédentes, dans lequel jusqu'à 30 % des microsphères dans la composition de caoutchouc sont dans un état dans lequel elles sont écrasées au moins en partie.

**12.** Bandage pneumatique selon la revendication 11, dans lequel l'écrasement partiel desdites microsphères est mis en oeuvre in situ au sein de la composition de caoutchouc via un mélange à cisaillement élevé de la composition de caoutchouc.

**13.** Bandage pneumatique selon au moins une des revendications précédentes, dans lequel les microsphères creuses représentent au moins un membre choisi parmi le groupe comprenant :

(i) des microsphères creuses en verre ;
(ii) des microsphères creuses en céramique ;
(iii) des microsphères creuses en matière plastique ou en matière synthétique ; ou un de leurs mélanges.

**14.** Bandage pneumatique selon la revendication 13, dans lequel les microsphères creuses sont des microsphères creuses en verre.

FIG-1

FIG-2

FIG—3A  K46 (41.4 MPa) Microsphere Loading, phr

FIG—3B  S60 (69.0 MPa) Microsphere Loading, phr

## REFERENCES CITED IN THE DESCRIPTION

**Patent documents cited in the description**

- US 6959743 B
- US 6095217 B
- US 6336486 B
- US 5967211 B
- US 6626216 B
- EP 1329479 A
- EP 1447424 A

**Non-patent literature cited in the description**

- *Journal of the American Chemical Society,* 1938, vol. 60
- The Vanderbilt Rubber Handbook. 1978, 417